# EUROPÄISCHE PATENTSCHRIFT

(11) **EP 2 155 622 B1**
(45) Veröffentlichungstag und Bekanntmachung des Hinweises auf die Patenterteilung: **12.03.2014**
(21) Anmeldenummer: 08758469.4
(22) Anmeldetag: 10.05.2008
(51) Int. Cl.: C03C 17/30, C09D 183/04, C08K 5/05, C08K 5/06, C08L 1/02, C08L 1/10, C08L 1/26, C08L 1/28

(54) **EINBRENNBARE SIEBDRUCKFÄHIGE ANTIREFLEXBESCHICHTUNG FÜR GLAS**
BAKEABLE, SCREEN PRINTABLE ANTIREFLECTION COATING FOR GLASS
REVÊTEMENT ANTIREFLET SÉRIGRAPHIABLE APTE À LA CUISSON POUR DU VERRE

(30) Priorität: 31.05.2007 DE 102007025590
(43) Veröffentlichungstag der Anmeldung: 24.02.2010
(73) Patentinhaber: Ferro GmbH, 60327 Frankfurt am Main (DE)
(72) Erfinder: FRITSCHE, Klaus-Dieter, 04680 Colditz (DE); TÜNKER, Gerhard, 63150 Heusenstamm (DE)
(74) Vertreter: Reinhardt, Markus
(86) Internationale Anmeldenummer: PCT/EP2008/003801
(87) Internationale Veröffentlichungsnummer: WO 2008/145253

(56) Entgegenhaltungen:
- WO-A-00/10934
- WO-A-2004/085555
- DE-A1- 19 946 712
- US-A1- 2004 186 216

## Beschreibung

Die vorliegende Erfindung betrifft Zusammensetzungen zur Herstellung von Antireflexionsbeschichtungen, Verfahren zur Herstellung dieser Zusammensetzungen sowie deren Verwendung

Beim Durchgang von Licht durch die Grenzfläche zweier Medien mit unterschiedlichem Brechungsindex wird ein Teil der Strahlung reflektiert. Beim senkrechten Einfall von Licht auf eine Glasscheibe mit dem Brechungsindex n = 1,5 beträgt der reflektierte Anteil insgesamt ca. 8%. Fällt das Licht schräg auf die Grenzfläche, wird in der Regel ein weitaus größerer Anteil reflektiert. Für viele Anwendungen ist eine hohe Reflexion unerwünscht, da diese zu einer Abnahme der Transmission führt.

Daher wurden Versuche unternommen diese Reflexion zu vermindern. Beispielsweise wurden Oberflächen mit einer hochporösen Beschichtung versehen, um dieses Ziel zu erreichen. Derartige Beschichtungen sind beispielsweise in DE 196 42 419 A1, DE 199 18 811 A1, DE 10 2004 027842 A1, DE 10 2006 001078 A1, WO 03/027034 A2, DE 100 51 724 A1 und DE 100 51 725 A1 dargelegt.

Die Druckschrift DE 196 42 419 A1 beschreibt die Verwendung von spezifischen Polymeren zur Herstellung von Zusammensetzungen, mit denen Antireflexionsbeschichtungen auf besonders einfache und kostengünstige Weise erhältlich sind. Allerdings können die Zusammensetzungen nur mit Tauchbeschichtungsverfahren aufgetragen werden.

In dem Dokument DE 199 18 811 A1 werden ebenfalls Zusammensetzungen dargelegt, die spezielle Polymere enthalten, um eine Antireflexionsbeschichtung herzustellen. Insbesondere können die Zusammensetzungen eingesetzt werden, um Sicherheitsgläser zu beschichten. Auch diese Zusammensetzungen können nur mit Tauchbeschichtungsverfahren aufgetragen werden.

Die in der Offenlegungsschrift DE 10 2004 027842 A1 beschriebenen Antireflexionsschichten weisen einen hohen Anteil an MgF₂ auf. Nachteilig ist hierbei insbesondere der Preis von MgF₂. Darüber hinaus kann bei unsachgemäßer Entsorgung der beschichteten Substrate unweltschädliche und giftige Flusssäure (HF) entstehen.

Eine mehrschichtige Antireflexionsbeschichtung wird in DE 10 2006 001078 A1 dargelegt, wobei die Beschichtung eine dichte und eine poröse Schicht aufweist. Die dichte Schicht umfasst im Allgemeinen Fluoride, so dass diese Beschichtung die zuvor dargelegten Nachteile aufweist. Zwar wird beschrieben, dass die poröse Schicht durch "Bar-Coating-Verfahren" aufgetragen werden kann. Allerdings findet sich in dieser Druckschrift kein konkretes Ausführungsbeispiel hierfür. Polymere werden zur Herstellung der Zusammensetzungen nicht eingesetzt.

Die Offenlegungsschrift WO 03/027034 A2 beschreibt Antireflexionsbeschichtungen, die eine besonders hohe mechanische Stabilität aufweisen. Diese Eigenschaft wird durch die Verwendung von SiO₂-Partikeln mit einer bestimmten Partikelgrößenverteilung erzielt. Die zur Beschichtung eingesetzten Zusammensetzungen werden durch Tauchverfahren aufgetragen:
Weiterhin offenbart die Druckschrift DE 100 51 724 A1 eine Beschichtungslösung zur Herstellung von Antireflexionsschichten. Allerdings kann diese Lösung nur durch Tauchverfahren, Sprühverfahren oder Rotationsbeschichtungsverfahren aufgetragen werden.

Darüber hinaus legt die Veröffentlichung DE 100 51 725 A1 Zusammensetzungen zur Herstellung von Antireflexionsschichten dar, die einen hohen Anteil an Tensiden aufweisen.

Allerdings kann diese Lösung nur durch Tauchverfahren, Sprühverfahren oder Rotationsbeschichtungsverfahren aufgetragen werden.

Tauchverfahren sind an sich relativ aufwendig, da große Mengen an Beschichtungslösung bereitgestellt werden müssen, um eine Scheibe komplett zu tauchen. Hierbei müssen massive Staubprobleme gelöst werden, um eine fehlerfreie Beschichtung zu erhalten. Siebdruckverfahren oder Walzenauftrag sind dagegen technisch einfacher in der Durchführung.

Siebdruckfähige SiO₂-Sole sind ebenfalls bekannt, wobei diese Sole jedoch nicht zur Herstellung von Antireflexionsbeschichtungen geeignet sind. Derartige Sole werden beispielsweise in DE 199 46 712 A1, DE 38 26 715 A1 und von Johanna Krön, Gerhard Schottner, Karl-Joachim Deichmann; Fundamentals of Glass Science & Technology - 3rd ESG Conf. 1995; Glastech. Ber. Glass Sei. Technol. 68 Cl (1995), S. 378 - 385, dargelegt.

Problematisch ist insbesondere, dass einfache Variationen der zuvor dargelegten Zusammensetzungen zur Herstellung von Antireflexionsbeschichtungen nicht zu siebdruckfähigen Pasten führen, durch die Beschichtungen mit guten Antireflexeigenschaften erhältlich sind.

In Anbetracht des Standes der Technik ist es nun Aufgabe der vorliegenden Erfindung Zusammensetzungen zur Herstellung von Antireflexionsbeschichtungen zur Verfügung zu stellen, mit denen besonders einfach und kostengünstig Substrate mit Antireflexionsschichten versehen werden können. Insbesondere sollten die Zusammensetzungen durch Druck- und Rollercoatingverfahren, beispielsweise Siebdruckverfahren auf Substrate aufgetragen und anschließend auf einfache Weise in Antireflexionsschichten überführt werden können. Eine weitere Aufgabe bestand darin Zusammensetzungen zur Herstellung von Antireflexionsschichten bereitzustellen, die in Beschichtungen mit einer besonders hohen Haftfestigkeit und mechanischen Stabilität überführt werden können.

Gelöst werden diese sowie weitere nicht explizit genannte Aufgaben, die jedoch aus den hierin einleitend diskutierten Zusammenhängen ohne weiteres ableitbar oder erschließbar sind, durch eine Zusammensetzung mit allen Merkmalen des Patentanspruchs 1. Zweckmäßige Abwandlungen der erfindungsgemäßen Zusammensetzungen werden in Unteransprüchen unter Schutz gestellt. Hinsichtlich der Verfahren zur Herstellung und Verwendung stellen die Gegenstände der Ansprüche 18 und 23 eine Lösung der zugrunde liegenden Aufgabe bereit.

Dadurch, dass eine Zusammensetzung zur Herstellung einer Antireflexionsbeschichtung mindestens ein polymeres Rheologie-Steuerungsmittel und mindestens ein Lösungsmittel mit einem Siedepunkt von mindestens 150°C umfasst, gelingt es überraschend eine Zusammensetzung, umfassend ein Kondensat erhältlich durch Kondensation von Silicium-Verbindungen der allgemeinen Formel

RₙSiX₄₋ₙ (I),

in der die Reste X gleich oder verschieden sind und hydrolysierbare Gruppen oder Hydroxylgruppen bedeuten, die Reste R gleich oder verschieden sind und nicht hydrolysierbare Gruppen bedeuten und n 0, 1, 2 oder 3 ist, bereitzustellen, welche auf besonders einfache und wirtschaftliche Weise auf ein Substrat aufgetragen werden kann.

Insbesondere kann die Zusammensetzung durch Walzenauftrag oder durch Druckverfahren, beispielsweise Siebdruckverfahren auf ein Substrat aufgebracht werden. Die durch die erfindungsgemäßen Zusammensetzungen erhältlichen Beschichtungen zeigen eine hohe mechanische Stabilität und eine hohe Haftfestigkeit auf vielen Substraten. Des Weiteren können die erfindungsgemäßen Zusammensetzungen kostengünstig und umweltfreundlich hergestellt und verarbeitet werden. Die beschichteten Substrate weisen hierbei eine überraschend hohe Transparenz auf.

Die erfindungsgemäße Zusammensetzung umfasst mindestens ein Kondensat, das durch Kondensation von Silicium-Verbindungen der allgemeinen Formel

RₙSiX₄₋ₙ (I),

in der die Reste X gleich oder verschieden sind und hydrolysierbare Gruppen oder Hydroxylgruppen bedeuten, die Reste R gleich oder verschieden sind und nicht hydrolysierbare Gruppen bedeuten und n 0, 1, 2 oder 3 ist, erhältlich ist.

Zur Herstellung der Kondensate können monomere Silicium-Verbindungen der Formel I eingesetzt werden oder von diesen abgeleitete Vorkondensate. Die hydrolytische Kondensation erfolgt durch Einwirken von Wasser oder Feuchtigkeit und gegebenenfalls in Anwesenheit eines Katalysators und/oder eines Lösungsmittels.

Bei den Silicium-Verbindungen der Formel I sind die hydrolysierbaren Gruppen X beispielsweise Wasserstoff oder Halogen, vorzugsweise F, Cl, Br oder I; Alkoxy, vorzugsweise C₁₋₆-Alkoxy, wie z. B: Methoxy, Ethoxy, n-Propoxy, i-Propoxy und Butoxy; Aryloxy, vorzugsweise C₆₋₁₀-Aryloxy, wie z. B. Phenoxy; Acyloxy; vorzugsweise C₁₋₆-Acyloxy, wie z. B. Acetoxy oder Propionyloxy; Alkylcarbonyl, vorzugsweise C₂₋₇-Alkylcarbonyl, wie z. B. Acetyl; Amino, Monoalkylamino oder Dialkylamino mit vorzugsweise 1 bis 12, insbesondere 1 bis 6 Kohlenstoffatomen.

In Formel I bedeutet R einen nicht hydrolysierbaren organischen Rest, der gegebenenfalls eine funktionelle Gruppe tragen kann. Beispiele für R sind Alkyl, vorzugsweise C₁₋₆-Alkyl, wie Methyl, Ethyl, n-Propyl, Isopropyl, n-Butyl, s-Butyl und t-Butyl, Pentyl; Hexyl oder Cyclohexyl; Alkenyl, vorzugsweise C₂₋₆-Alkenyl, wie z. B. Vinyl, 1-Propenyl, 2-Propenyl und Butenyl; Alkinyl, vorzugsweise C₂₋₆-Alkinyl, wie z. B. Acetylenyl und Propargyl; und Aryl, vorzugsweise C₆₋₁₀-Aryl, wie z. B. Phenyl und Naphthyl.

Spezielle Beispiele funktionelle Gruppen des Restes R sind die Epoxy-, Hydroxy-, Ether-, Amino-, Monoalkylamino-, Dialkylamino-, Amid-, Carboxy-, Mercapto, Thio-ether-, Vinyl-, Acryloxy-, Methacryloxy-, Cyano-, Halogen-, Aldehyd-, Alkylcarbonyl-, Sulfonsäure- und Phosphorsäuregruppe. Diese funktionellen Gruppen sind über Alkylen-, Alkenylen- oder Arylen-Brückengruppen, die durch Sauerstoff- oder Schwefelatome oder NH-Gruppen unterbrochen sein können, an das Siliciumatom gebunden. Die genannten Brückengruppen leiten sich z. B. von den oben genannten Alkyl-, Alkenyl- oder Arylresten ab. Die Reste R enthalten vorzugsweise 1 bis 18, insbesondere 1 bis 8 Kohlenstoffatome. Die genannten Reste R und X können gegebenenfalls einen oder mehrere übliche Substituenten, wie z. B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂, aufweisen.

Die Silicium-Verbindungen der allgemeinen Formel I sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

In einer bevorzugten Ausführungsform werden zur Herstellung des Kondensats Silicium-Verbindungen der allgemeinen Formel SiX₄, in der die Reste X gleich oder verschieden sind und hydrolysierbare Gruppen oder Hydroxylgruppen bedeuten, eingesetzt. Ohne Einschränkung der Allgemeinheit sind konkrete Beispiele für derartige Silicium-Verbindungen SiCl₄, HSiCl₃, Si(OCH₃)₄, Si(OOCCH₃)₄ und Si(OC₂H₅)₄, wobei Tetraalkoxysilane, beispielsweise Si(OCH₃)₄ (TMOS) oder Si(OCH₂CH₃)₄ (TEOS) besonders bevorzugt sind. Die genannten Verbindungen können einzeln oder als Mischung eingesetzt werden. Der Anteil an Silicium-Verbindungen der allgemeinen Formel SiX₄ liegt vorzugsweise im Bereich von 0 Gew.-% bis 100 Gew.-% besonders bevorzugt im Bereich von 20 Gew.-% bis 80 Gew.-%, bezogen auf die Gesamtmenge an monomeren Silicium-Verbindungen.

Gemäß einem weiteren Aspekt der vorliegenden Erfindung wird zur Herstellung des Kondensats vorzugsweise eine Mischung von Silanen eingesetzt, die mindestens eine Silicium-Verbindung der Formel RSiX₃ umfasst, in der die Reste X gleich oder verschieden sind und hydrolysierbare Gruppen oder Hydroxylgruppen bedeuten und der Rest R eine nicht hydrolysierbare Gruppen bedeutet. Ohne Einschränkung der allgemeinen Lehre sind konkrete Beispiele für derartige Silicium-Verbindungen Cl₃SiCH₃, S₁(CH₃)(OC₂H₅)₃; Cl₃Si(C₂H₅), Si(C₂H₅)(OC₂H₅)₃, Si(OC₂H₅)₃(CH₂-CH=CH₂), Si(OOCCH₃)₃(CH₂-CH=CH₂), Cl₃Si(CH=CH₂), Si(CH=CH₂)(OC₂H₅)₃, Si(CH=CH₂)(OC₂H₄OCH₃)₃ und Si(CH=CH₂)(OOCCH₃)₃. Die genannten Verbindungen können einzeln oder als Mischung eingesetzt werden. Der Anteil an Silicium-Verbindungen der allgemeinen Formel RSiX₃ liegt vorzugsweise im Bereich von 0 Gew.-% bis 100 Gew.-%, besonders bevorzugt im Bereich von 20 bis 80 bezogen auf die Gesamtmenge an monomeren Silicium-Verbindungen.

Vorzugsweise kann das Kondensat durch Kondensation einer Mischung erhalten werden, die mindestens eine Silicium-Verbindung der Formel R₂SiX₂ umfasst, in der die Reste X gleich oder verschieden sind und hydrolysierbare Gruppen oder Hydroxylgruppen bedeuten und die Reste R gleich oder verschieden sind und nicht hydrolysierbare Gruppen bedeuten. Ohne Einschränkung der allgemeinen Lehre sind konkrete Beispiele für derartige Silicium-Verbindungen Cl₂Si(CH₃)₂, Si(CH₃)₂(OC₂H₅)₂, Si(C₂H₅)₂(OC₂H₅)₂, Cl₂Si(CH=CH₂)(CH₃), Si(CH₃)₂(OCH₃)₂, Cl₂Si(C₆H₅)₂, und Si(C₆H₅)₂(OC₂H₅)₂. Die genannten Verbindungen können einzeln oder als Mischung eingesetzt werden. Der Anteil an Silicium-Verbindungen der allgemeinen Formel R₂SiX₂ liegt vorzugsweise im Bereich von 0 Gew.-% bis 100 Gew.-% besonders bevorzugt im Bereich von 20 Gew.-% bis 80 Gew.-%, bezogen auf die Gesamtmenge an monomeren Silicium-Verbindungen.

Darüber hinaus kann das Kondensat durch Kondensation einer Mischung erhalten werden, die mindestens eine Silicium-Verbindung der Formel R₃SiX umfasst, in der der Rest X eine hydrolysierbare Gruppe oder eine Hydroxylgruppe bedeutet und die Reste R gleich oder verschieden sind und nicht hydrolysierbare Gruppen bedeuten. Ohne Einschränkung der allgemeinen Lehre sind konkrete Beispiele für derartige Silicium-Verbindungen. (C₆H₅)₃SiOH, Si(CH₃)₃(OC₂N₅) und Si(CH₂CH₃)₃(OC₂H₅). Die genannten Verbindungen können einzeln oder als Mischung eingesetzt werden. Der Anteil an Silicium-Verbindungen der allgemeinen Formel R₃SiX liegt vorzugsweise im Bereich von 0 Gew.-% bis 40 Gew.-%, besonders bevorzugt im Bereich von 10 Gew.-% bis 20 Gew.-% bezogen auf die Gesamtmenge an monomeren Silicium-Verbindungen.

Gemäß einer weiteren bevorzugten Ausführungsform werden zur Herstellung des Kondensats Mischungen von Silicium-Verbindungen der zuvor dargelegten Formeln SiX₄, RSiX₃ und R₃SiX eingesetzt.

Nach einem bevorzugten Aspekt der vorliegenden Erfindung kann zur Herstellung des Kondensats eine Mischung von Silicium-Verbindungen der zuvor dargelegten Formeln SiX₄ und R₂SiX₂ eingesetzt werden.

Vorzugsweise liegt das molare Verhältnis der Silicium-Verbindungen der allgemeinen Formeln SiX₄ zu den Silicium-Verbindungen der allgemeinen Formeln RSiX₃ im Bereich von 10:1 bis 1:10 besonders bevorzugt im Bereich von 3:1 bis 1:3

Vorzugsweise liegt das molare Verhältnis der Silicium-Verbindungen der allgemeinen Formeln SiX₄ zu den Silicium-Verbindungen der allgemeinen Formeln R₃SiX im Bereich von 10:1 bis 1:10, besonders bevorzugt im Bereich von 3:1 bis 1:3.

Vorzugsweise liegt das molare Verhältnis der Silicium-Verbindungen der allgemeinen Formeln RSiX₃ zu den Silicium-Verbindungen der allgemeinen Formeln R₃SiX im Bereich von 10:1 bis 1:10, besonders bevorzugt im Bereich von 3:1 bis 1:3.

Vorzugsweise liegt das molare Verhältnis der Silicium-Verbindungen der allgemeinen Formeln RSiX₄ zu den Silicium-Verbindungen der allgemeinen Formeln R₂SiX₂ im Bereich von 10:1 bis 1:10, besonders bevorzugt im Bereich von 3:1 bis 1:3.

Silane der allgemeinen Formel I sind entweder käuflich erwerbbar oder nach Methoden herstellbar wie in "Chemie und Technologie der Silicone" (W. Noll, Verlag Chemie, Weinheim/Bergstraße, 1968) beschrieben. Sie können entweder als solche oder in vorkondensierter Form eingesetzt werden.

Zum Aufbau des anorganischen Netzwerkes werden die Silane der allgemeinen Formel I hydrolysiert und polykondensiert. Die Polykondensation erfolgt vorzugsweise nach dem Sol-Gel-Verfahren, wie es z. B. in den DE 27 58 414, DE 27 58 415, DE 30 11 761, DE 38 26 715 und DE 38 35 968 beschrieben ist. Die hydrolytische Kondensation kann z. B. dadurch erfolgen, dass man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt und die resultierende Mischung daraufhin einige Zeit, beispielsweise ein bis mehrere Stunden, rührt. Die Hydrolyse und Polykondensation erfolgt vorzugsweise unter Rühren und in Anwesenheit eines sauren oder basischen Kondensationskatalysators wie HCl, HNO₃ oder NH₃.

Die Hydrolyse erfolgt in der Regel bei Temperaturen zwischen -20 und 130°C, vorzugsweise zwischen 60 und 110°C bzw. dem Siedepunkt des gegebenenfalls eingesetzten Lösungsmittels. Die beste Art und Weise der Zugabe von Wasser hängt vor allem von der Reaktivität der eingesetzten Ausgangsverbindungen ab. So kann man z. B. die gelösten Ausgangsverbindungen langsam zu einem Überschuss an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Die Wasserzugabe kann aber auch über eine chemische Reaktion erfolgen, bei der Wasser im Laufe der Reaktion freigesetzt wird. Beispiele hierfür sind Veresterungen.

Der Anteil an SiO₂-Kondensat in der Zusammensetzung liegt vorzugsweise im Bereich von 0,01 Gew.-% bis 5 Gew.-%, besonders bevorzugt im Bereich von 0,1 Gew.-% bis 3 Gew.-%. Dieser Anteil bezieht sich auf das Gewicht des SiO₂-Kondensats nach der Hydrolyse, ohne organische Bestandteile. Dieser Gehalt ergibt sich besonders einfach aus dem Gewicht einer durch einen Brennvorgang erhaltenen Schicht, bezogen auf das Gewicht vor dem Brennen.

Gemäß einem besonderen Aspekt der vorliegenden Erfindung liegt das Kondensat in der Zusammensetzung in einer kolloidal-dispersen Form vor.

Des Weiteren umfasst die erfindungsgemäße Zusammensetzung mindestens ein polymeres Rheologie-Steuerungsmittel. Rheologie-Steuerungsmittel im Sinne der vorliegenden Erfindung sind Verbindungen, die zu einer Strukturviskosität oder einem thixotropen Verhalten einer Zusammensetzung führen. Diese Verbindungen sind allgemein übliche Zusätze in Siebdruckpasten. Vorzugsweise haben diese Polymere eine dispersions- und kolloidstabilisierende Wirkung. Bevorzugte Rheologie-Steuerungsmittel können ab einer Temperatur von ca. 500°C vollständig verbrannt werden.

Die Rheologie-Steuerungsmittel umfassen Hydroxygruppen.

Vorzugsweise liegt das Molekulargewicht des Rheologie-Steuerungsmittels im Bereich von 500 g/mol bis 500000 g/mol, besonders bevorzugt im Bereich von 2000 g/mol bis 400000 g/mol. Das Molekulargewicht bezieht sich hierbei auf das Gewichtsmittel und kann beispielsweise über Gel-Permeations-Chromatographie (GPC) bestimmt werden.

Gemäß einem besonderen Aspekt können als Rheologie-Steuerungsmittel insbesondere Cellulose, Cellulosederivate, besonders bevorzugt Celluloseether und/oder Celluloseester eingesetzt werden. Hierzu gehören insbesondere Hydroxypropylmethylcellulose,

Die Menge an Rheologie-Steuerungsmittel liegt im Bereich von 5 Gew.-% bis 15 Gew.-%.

Darüber hinaus umfasst die erfindungsgemäße Zusammensetzung vorzugsweise mindestens 60 Gew.-%, besonders bevorzugt mindestens 70 Gew.-% Lösungsmittel, das einen Siedepunkt von mindestens 150°C, besonders bevorzugt mindestens 200°C aufweist. Gemäß einem bevorzugten Aspekt der vorliegenden Erfindung kann die Lösungsmittelmenge im Bereich von 60 bis 99,5 Gew.-% und besonders bevorzugt im Bereich von 80 bis 95 Gew.-% liegen. Bevorzugte Beispiele für geeignete hochsiedende organische Lösungsmittel sind Di-, Tri-, Tetra-, Penta- oder Hexamere von Monoglycolen, wie z. B. die Di-, Tri-, Tetra-, Penta- oder Hexameren von Ethylen-, Propylen- oder Butylenglycol, und deren Mono- oder Diether, wobei eine oder beide Hydroxylgruppen durch z. B. eine Methoxy-, Ethoxy-, Propoxy- oder Butoxygruppe ersetzt sein können; Terpene, z. B. Terpineol; und Polyole, z. B. 2-Methyl-2,4-pentandiol. Spezielle hochsiedende Lösungsmittel sind Polyethylenglycole und deren Ether, wie Diethylenglycol, Triethylenglycol und Tetraethylenglycol, Diethylenglycoldiethylether, Tetraethylenglycoldimethylether oder Diethylenglycolmonobutylether. Hiervon sind Diethylenglycol, Tetraethylenglycol und Diethylenglycolmonobutylether besonders bevorzugt. Selbstverständlich können auch Mischungen aus zwei oder mehreren dieser Lösungsmittel eingesetzt werden.

Die Menge des eingesetzten Lösungsmittel richtet sich nach Menge und Löslichkeit der (teil)kondensierten Silicium-Verbindungen und der eingesetzten Polymere. Des Weiteren kann ein Alkohol als Moderator für die Hydrolyse und die Kondensation fungieren und man kann dadurch die Reaktivität des Systems steuern und den Erfordernissen des jeweiligen Anwendungsfalles anpassen.

Die Zusammensetzung der vorliegenden Erfindung kann vorteilhaft mit Druckverfahren, beispielsweise mit Siebdruckverfahren, und Walzenauftrag auf ein Substrat aufgetragen werden. Dementsprechend weist die erfindungsgemäße Zusammensetzung eine Strukturviskosität oder ein thixotropes Verhalten auf. Bei einer Scherung von 0,5 s⁻¹ und einer Temperatur von 25 °C weisen bevorzugte Zusammensetzungen eine Viskosität im Bereich von 0,5 Pa*s bis 8 Pa*s, besonders bevorzugt 1,0 bis 6 Pa*s auf. Die Viskosität bei einer Scherung von 30 s⁻¹ und einer Temperatur von 25°C bevorzugter Zusammensetzungen liegt vorzugweise im Bereich von 0,6 Pa*s bis 4 Pa*s, besonders bevorzugt im Bereich von 0,8 Pa*s bis 2,5 Pa*s. Bei einer Scherung von 0,5 s⁻¹ ist die Viskosität der Zusammensetzung vorzugsweise mindestens doppelt so groß wie die Viskosität bei einer Scherung von 30 s⁻¹.

Die Zusammensetzung kann vorzugsweise als kolloidale-disperse Lösung vorliegen, in der das Kondensat partikelförmig in der Zusammensetzung vorhanden ist. Die erfindungsgemäße Zusammensetzung kann dadurch erhalten werden, dass man die einzelnen Bestandteile der Zusammensetzung mischt, wobei die zuvor beschriebene Kondensation der Silicium-Verbindungen der Formel I in Gegenwart des Rheologie-Steuerungsmittels erfolgt. Hierbei können die monomeren Silicium-Verbindungen oder Vorkondensate eingesetzt werden.

Überraschend kann die Herstellung hierbei in einem Schritt erfolgen, wobei die Wassermenge so gewählt wird, dass möglichst wenig überschüssiges Wasser abgetrennt werden muss. Bevorzugt müssen höchstens 20 Gew.-%, besonders bevorzugt höchstens 5 Gew.-% Wasser nach der Hydrolyse aus der Zusammensetzung abgetrennt werden. Gemäß einer besonders bevorzugten Ausführungsform wird nach der Hydrolyse kein Wasser abgetrennt. Hierdurch gelingt es überraschend die Zusammensetzung in einem Schritt herzustellen.

Nach der Hydrolyse der Silicium-Verbindungen zur Herstellung des Kondensats, können die erhaltenen Zusammensetzungen mit Lösungsmitteln und/oder Rheologie-Steuerungsmittel versetzt werden. Hierdurch kann die Zusammensetzung an die Erfordernisse der Beschichtungsmaschine angepasst werden. Durch diese Maßnahme kann beispielsweise die Schichtdicke der Antireflexionsbeschichtung eingestellt werden. Überraschend stellt daher die vorliegende Erfindung eine Paste zur Verfügung, die mit einfachen Mitteln an die besonderen Erfordernisse der spezifischen Vorrichtungen zum Auftragen der Paste angepasst werden kann. Hierdurch können insbesondere produktionstechnische Vorteile erzielt werden.

Nach dem Auftragen der Zusammensetzung können die organischen Bestandteile, d. h. das Rheologie-Steuerungsmittel, die Lösungsmittel und die gegebenenfalls im Polykondensat vorhandenen Reste R, durch Erhitzen entfernt werden. Die dabei angewandten Temperaturen richten sich selbstverständlich nach der thermischen Stabilität der beschichteten Substrate und der zu entfernenden organischen Bestandteile. Es resultiert eine rein anorganische Antireflexionsbeschichtung, die thermisch stark belastbar ist. Das Erhitzen erfolgt vorzugsweise bei Temperaturen im Bereich von 500 °C bis 1000°C, besonders bevorzugt im Bereich von 550 bis 700°C. Der Brand kann in üblichen Flachglasbrenn- oder Härteöfen erfolgen.

Die erfindungsgemäße Zusammensetzung kann auf mineralische Gläser aufgetragen werden, um die Reflexion zu mindern. Die erfindungsgemäße Antireflexionsbeschichtung kann z. B. zur Entspiegelung und Erhöhung der Transmission von Kathodenstrahlröhren, Instrumentenanzeigen, Brillengläsern, Bildschirmen, Solarkollektoren, Fenstern, etc. eingesetzt werden.

Bevorzugte mit einer Antireflexionsbeschichtung versehene Substrate können beispielsweise eine Transmission von mindestens 95%, bevorzugt mindestens 96% aufweisen. Hierbei kann die Beschichtung sowohl einseitig als auch beidseitig aufgetragen werden, wobei ein beidseitiger Auftrag vielfach zu einer besonders hohen Transmission bzw. einer geringen Reflexion führt.

Nachfolgend wird die vorliegende Erfindung anhand von Beispielen näher erläutert, ohne dass hierdurch eine Begrenzung der Erfindung erfolgen soll.

### Beispiel 1

Herstellung einer Paste aus Triphenylsilanol, MTES und TEOS in einem Schritt.

2,3g.Triphenylsilanol, 1,734g Tetraethoxysilan und 0,742g Methyltriethoxysilan werden in 42,37g einer Lösung von 7,5% Hydroxypropylmethylcellulose (Klucel L) in Glycolether (Dowanol TPM) gelöst. Anschließend werden 0,25g 65%-ige HNO₃ und 2,43g Wasser zugemischt. Darauf folgend werden 0,18g 25%-iger Ammoniak eingerührt und 2 Stunden bei 70°C im Rückfluß gerührt. Es entsteht eine klar durchsichtige Paste. Die Paste wird mit einer Lösung von 7,5% Klucel L in Dowanol TPM 1 : 1 gemischt, mittels eines 100T Siebes auf Flachglas gedruckt, bei 120°C 10 Minuten getrocknet und 5 Minuten bei 600°C gebrannt. Es entsteht eine farblos reflektierende Antireflexschicht. Bei einer beidseitigen Beschichtung wird ein Glas erhalten, welches eine besonders geringe Reflexion zeigt, wobei die Transmission um ca. 6% gegenüber dem ursprünglichen Glas erhöht wurde.

### Beispiel 2

Herstellung einer Paste aus Diphenyldiethoxysilan, und TEOS in einem Schritt.

4,534g Diphenyldiethoxysilan und 1,734g Tetraethoxysilan werden in 40,88g einer Lösung von 7,5% Klucel L in Dowanol TPM gelöst. Anschließend werden 0,25g 65%-ige HNO₃ und 2,43g Wasser zugemischt. Darauf folgend werden 0,18g 25%-iger Ammoniak eingerührt und 2 Stunden bei 70°C im Rückfluß gerührt. Es entsteht eine klar durchsichtige Paste. Die Paste wird mit einer Lösung von 7,5% Klucel L in Dowanol TPM 1 : 1 gemischt, mittels eines 100T Siebes auf Flachglas gedruckt, bei 120°C 10 Minuten getrocknet und 5 Minuten bei 600°C gebrannt. Es entsteht eine farblos reflektierende Antireflexschicht. Bei einer beidseitigen Beschichtung wird ein Glas erhalten, welches eine besonders geringe Reflexion zeigt, wobei die Transmission um ca. 5% gegenüber dem ursprünglichen Glas erhöht wurde.

## Patentansprüche

1. Zusammensetzung zur Herstellung einer Antireflexionsbeschichtung, umfassend ein Kondensat erhältlich durch Kondensation von Silicium-Verbindungen der allgemeinen Formel
RₙSiX₄₋ₙ (I),
in der die Reste X gleich oder verschieden sind und hydrolysierbare Gruppen oder Hydroxylgruppen bedeuten, die Reste R gleich oder verschieden sind und nicht hydrolysierbare Gruppen bedeuten und n 0,1,2 oder 3 ist, **dadurch gekennzeichnet, dass** die Zusammensetzung mindestens ein polymeres Rheologie-Steuerungsmittel und mindestens ein Lösungsmittel mit einem Siedepunkt von mindestens 150°C umfasst, wobei die Kondensation in Gegenwart des mindestens einen polymeren Rheologie-Steuerungsmittels, welches Hydroxygruppen umfasst, erfolgt und die Zusammensetzung 5 Gew.-% bis 15 Gew.-% polymeres Rheologie-Steuerungsmittel umfasst.

2. Zusammensetzung gemäß Anspruch 1, **dadurch gekennzeichnet, dass** die Zusammensetzung bei einer Scherung 0,5 s⁻¹ und einer Temperatur von 25 °C eine Viskosität im Bereich von 1,0 bis 6 Pa*s aufweist.

3. Zusammensetzung gemäß Anspruch 1 oder 2, **dadurch gekennzeichnet, dass** die Zusammensetzung bei einer Scherung von 30 s⁻¹ und einer Temperatur von 25 °C eine Viskosität im Bereich von 0,8 Pa*s bis 2,5 Pa*s aufweist.

4. Zusammensetzung gemäß mindestens einem der vorhergehenden Ansprüche, **dadurch gekennzeichnet, dass** das Rheologie-Steuerungsmittel Cellulose oder ein Cellulose-Derivat ist.

5. Zusammensetzung gemäß mindestens einem der vorhergehenden Ansprüche, **dadurch gekennzeichnet, dass** das Kondensat durch Kondensation einer Mischung erhältlich ist, die mindestens eine Silicium-Verbindung der Formel SiX₄ umfasst, in der die Reste X gleich oder verschieden sind und hydrolysierbare Gruppen oder Hydroxylgruppen bedeuten, wobei der Anteil der Silicium-Verbindung gemäß Formel SiX₄ im Bereich von 20 Gew.-% bis 80 Gew.-%, bezogen auf die Gesamtmenge an monomeren Silicium-Verbindungen, beträgt.

6. Zusammensetzung gemäß mindestens einem der vorhergehenden Ansprüche, **dadurch gekennzeichnet, dass** die Zusammensetzung mindestens 60 Gew.-% Lösungsmittel mit einem Siedepunkt von mindestens 150°C enthält.

7. Zusammensetzung gemäß mindestens einem der vorhergehenden Ansprüche, **dadurch gekennzeichnet, dass** der Anteil an SiO₂-Kondensat in der Zusammensetzung im Bereich von 0,01 Gew.-% bis 5 Gew.-% liegt.

8. Verfahren zur Herstellung einer Zusammensetzung gemäß mindestens einem der vorhergehenden Ansprüche 1 bis 7, **dadurch gekennzeichnet, dass** man eine Mischung umfassend mindestens ein Lösungsmittel mit einem Siedepunkt von mindestens 150°C, mindestens ein Rheologie-Steuerungsmittel, welches Hydroxygruppen umfasst, und mindestens eine Verbindung der allgemeinen Formel
RₙSiX₄₋ₙ (I),
in der die Reste gleich oder verschieden sind und R einen organischen Rest mit 1 bis 10 KohlenstoffAtomen bedeutet, der durch Sauerstoff-und/oderSchwefel-Atome und/oder durch Amino-Gruppen unterbrochen sein kann, X für Wasserstoff, Halogen, Hydroxy, Alkoxy, Acyloxy, Alkylcarbonyl, Alkoxycarbonyl oder NR'₂ steht, mit R' gleich Wasserstoff,
Alkyl oder Aryl und n gleich 0, 1, 2 oder 3 ist,
mischt und die Verbindungen der Formel (I) kondensiert.

9. Verfahren gemäß Anspruch 8, **dadurch gekennzeichnet, dass** die Menge an zugegebenem Wasser so wählt, dass höchstens 20 Gew.-% des Wassers durch Destillation nach oder während der Kondensation abgetrennt werden.

10. Verfahren gemäß Anspruch 8 oder 9, **dadurch gekennzeichnet, dass** man die Zusammensetzung in einem einzigen Verfahrensschritt herstellt, wobei die einzelnen Komponenten gemischt und kondensiert werden.

11. Verfahren zur Herstellung einer Antireflexbeschichtung, **dadurch gekennzeichnet, dass** man eine Zusammensetzung gemäß mindestens einem der Ansprüche 1 bis 7 oder eine Zusammensetzung erhältlich gemäß mindestens einem der Ansprüche 8 bis 10 auf ein Substrat aufträgt und unter Erhalt einer nanopörosen Schicht einbrennt.

12. Verfahren gemäß Anspruch 11, **dadurch gekennzeichnet, dass** man die Zusammensetzung bei einer Temperatur im Bereich von 550°C bis 750°C einbrennt.

13. Verfahren gemäß Anspruch 11 oder 12, **dadurch gekennzeichnet, dass** man die Schichtdicke der Antireflexionsbeschichtung durch Mischen der Zusammensetzung mit einer Mischung einstellt, die Lösungsmittel und Rheologie-Steuerungsmittel enthält.

14. Verfahren gemäß mindestens einem Ansprüche 11 bis 13, **dadurch gekennzeichnet, dass** der Brand in einem Flachglasbrenn- oder Härteofen erfolgt.

## Claims

1. Composition for producing an antireflective coating, comprising a condensate obtainable by condensation of silicon compounds of the general formula
RₙSiX₄₋ₙ (I)
in which the radicals X are identical or different and signify hydrolysable groups or hydroxyl groups, the radicals R are identical or different and signify non-hydrolysable groups and n is 0, 1, 2 or 3, **characterized in that** the composition comprises at least one polymeric rheology control agent and at least one solvent having a boiling point of at least 150 ° C, the condensation being carried out in the presence of the at least one polymeric rheology control agent, which comprises hydroxy groups, and the composition comprises 5% by weight to 15% by weight of polymeric rheology control agent.

2. Composition according to Claim 1, **characterized in that**, with a shear rate of 0.5 s⁻¹ and at a temperature of 25° C, the composition has a viscosity in the range from 1.0 to 6 Pa*s.

3. Composition according to Claim 1 or 2, **characterized in that**, with a shear rate of 30 s⁻¹ and at a temperature of 25° C, the composition has a viscosity in the range from 0.8 Pa*s to 2.5 Pa*s.

4. Composition according to at least one of the preceding claims, **characterized in that** the rheology control agent is cellulose or a cellulose derivative.

5. Composition according to at least one of the preceding claims, **characterized in that** the condensate can be obtained by condensation of a mixture which comprises at least one silicon compound of the formula SiX₄, in which the radicals X are identical or different and signify hydrolysable groups or hydroxyl groups, the proportion of the silicon compound according to the formula SiX₄ lying in the range from 20% by weight to 80% by weight, based on the total quantity of monomeric silicon compounds.

6. Composition according to at least one of the preceding claims, **characterized in that** the composition contains at least 60% by weight solvent with a boiling point of at least 150° C.

7. Composition according to at least one of the preceding claims, **characterized in that** the proportion of SiO₂ condensate in the composition lies in the range from 0.01 % by weight to 5% by weight.

8. Process for producing a composition according to at least one of the preceding Claims 1 to 7, **characterized in that** a mixture is made comprising at least one solvent having a boiling point of at least 150 ° C, at least one rheology control agent, which comprises hydroxy groups, and at least one compound of the general formula
RₙSiX₄₋ₙ (I)
in which the radicals are identical or different and R signifies an organic radical having 1 to 10 carbon atoms, which can be interrupted by oxygen and/or sulphur atoms and/or by amino groups, X stands for hydrogen, halogen, hydroxy, alkoxy, acyloxy, alkylcarbonyl, alkoxycarbonyl or NR'₂, with R' equal to hydrogen,
alkyl or aryl and n equal to 0, 1, 2 or 3,
and the compounds of the formula (I) are condensed.

9. Process according to Claim 8, **characterized in that** the quantity of water added is chosen such that at most 20% by weight of the water is separated by distillation after or during the condensation.

10. Process according to Claim 8 or 9, **characterized in that** the composition is produced in a single process step, the individual components being mixed and condensed.

11. Process for producing an antireflective coating, **characterized in that** a composition according to at least one of Claims 1 to 7 or a composition that can be obtained in accordance with at least one of Claims 8 to 10 is applied to a substrate and is baked, obtaining a nano-porous layer.

12. Process according to Claim 11, **characterized in that** the composition is baked as a temperature in the range from 550° C to 750° C.

13. Process according to Claim 11 or 12, **characterized in that** the layer thickness of the antireflective coating is adjusted by mixing the composition with a mixture which contains solvent and rheology control agent.

14. Process according to at least one of Claims 11 to 13, **characterized in that** the baking is carried out in a float-glass furnace or annealing furnace.

## Revendications

1. - Composition pour la production d'un revêtement antireflet, comprenant un condensat qui est apte à être obtenu par condensation de composés du silicium de la formule générale :
RₙSiX₄₋ₙ (I)
dans laquelle les restes X sont identiques ou différents et représentent des groupes hydrolysables ou des groupes hydroxyle, les restes R sont identiques ou différents et représentent des groupes non hydrolysables, et n est 0, 1, 2 ou 3, **caractérisée en ce que** la composition comprend au moins un agent de régulation de la rhéologie polymère et au moins un solvant ayant un point d'ébullition d'au moins 150 °C, la condensation ayant lieu en présence de l'agent ou des agents de régulation de la rhéologie polymères qui comprend ou comprennent des groupes hydroxy et la composition comprenant 5 % en poids à 15 % en poids d'agent de régulation de la rhéologie polymère.

2. - Composition selon la revendication 1, **caractérisée en ce que** la composition présente une viscosité se situant dans la plage de 1,0 à 6 Pa*s à un cisaillement de 0,5 s⁻¹ et à une température de 25 °C.

3. - Composition selon l'une des revendications 1 ou 2, **caractérisée en ce que** la composition présente une viscosité se situant dans la plage de 0,8 Pa*s à 2,5 Pa*s à un cisaillement de 30 s⁻¹ et à une température de 25 °C.

4. - Composition selon au moins l'une des revendications précédentes, **caractérisée en ce que** l'agent de régulation de la rhéologie est la cellulose ou un dérivé de cellulose.

5. - Composition selon au moins l'une des revendications précédentes, **caractérisée en ce que** le condensat est apte à être obtenu par condensation d'un mélange qui comprend au moins un composé du silicium de la formule SiX₄ dans laquelle les restes X sont identiques ou différents et représentent des groupes hydrolysables ou des groupes hydroxyle, la proportion du composé du silicium selon la formule SiX₄ se situant dans la plage de 20 % en poids à 80 % en poids par rapport à la quantité totale de composés du silicium monomères.

6. - Composition selon au moins l'une des revendications précédentes, **caractérisée en ce que** la composition contient au moins 60 % en poids de solvant ayant un point d'ébullition d'au moins 150 °C.

7. - Composition selon au moins l'une des revendications précédentes, **caractérisée en ce que** la proportion de condensat de SiO₂ dans la composition se situe dans la plage de 0,01 % en poids à 5 % en poids.

8. - Procédé de fabrication d'une composition selon au moins l'une des revendications précédentes 1 à 7, **caractérisé en ce que** l'on mélange un mélange comprenant au moins un solvant ayant un point d'ébullition d'au moins 150 °C, au moins un agent de régulation de la rhéologie qui comprend des groupes hydroxy et au moins un composé de la formule générale :
RₙSiX₄₋ₙ
dans laquelle les restes sont identiques ou différents et R représente un reste organique ayant 1 à 10 atomes de carbone, qui peut être interrompu par des atomes d'oxygène et/ou de soufre et/ou par des groupes amino, X représente hydrogène, halogène, hydroxy, alcoxy, acyloxy, alkylcarbonyle, alcoxycarbonyle ou NR'₂ , où R' représente hydrogène, alkyle ou aryle, et n est 0, 1, 2 ou 3, et que l'on condense les composés de la formule (1).

9. - Procédé selon la revendication 8, **caractérisé en ce que** l'on choisit la quantité d'eau à ajouter de telle manière qu'au plus 20 % en poids de l'eau sont séparés par distillation après ou pendant la condensation.

10. - Procédé selon l'une des revendications 8 ou 9, **caractérisé en ce que** l'on produit la composition en une seule étape de procédé, dans laquelle les différents composants sont mélangés et condensés.

11. - Procédé de production d'un revêtement antireflet, **caractérisé en ce que** l'on dépose sur un substrat une composition selon au moins l'une des revendications 1 à 7, ou une composition qui est apte à être obtenue selon au moins l'une des revendications 8 à 10, et que l'on cuit avec obtention d'une couche nanoporeuse.

12. - Procédé selon la revendication 11, **caractérisé en ce que** l'on cuit la composition à une température se situant dans la plage de 550 °C à 750 °C.

13. - Procédé selon l'une des revendications 11 ou 12, **caractérisé en ce que** l'on règle l'épaisseur de la couche du revêtement antireflet en mélangeant la composition avec un mélange qui contient des solvants et des agents de régulation de la rhéologie.

14. - Procédé selon au moins l'une des revendications 11 à 13, **caractérisé en ce que** la cuisson a lieu dans un four de cuisson pour verre plat ou dans un four de durcissement.
